# EUROPEAN PATENT SPECIFICATION

(11) **EP 2 333 699 B1**
(45) Date of publication and mention of the grant of the patent: **07.10.2020**
(21) Application number: 10194138.3
(22) Date of filing: 08.12.2010
(51) Int. Cl.: G06K 15/02

(54) **Printing apparatus, printing method, and program**
Druckvorrichtung, Druckverfahren und Programm
Appareil d'impression, procédé d'impression et programme

(30) Priority: 09.12.2009 JP 2009279829
(43) Date of publication of application: 15.06.2011
(73) Proprietor: CANON KABUSHIKI KAISHA, Ohta-ku Tokyo 146-8501 (JP)
(72) Inventor: Wakana, Toru, Ohta-ku Tokyo 146-8501 (JP)
(74) Representative: Canon Europe Limited

(56) References cited:
- EP-A2- 1 306 798
- US-A1- 2006 187 488

## Description

### BACKGROUND OF THE INVENTION

### Field of the Invention

The present invention relates to a printing apparatus, a printing method, and a program.

### Description of the Related Art

Conventionally, there has been used variable printing in which printing is performed by combining image data of fixed data and image data of variable data.

Recently, Portable Document Format/Variable and Transactional (PDF/VT) has been proposed as a data format enabling efficient execution of the variable printing. In the PDF/VT format, new techniques for enabling reuse of fixed data are prepared. For example, one technique is to cache fixed data in a rasterized state and share it with another printing for reuse of the fixed data.

Further, there has been disclosed the technique for rasterizing the object into image data and storing it into a memory when an object being rasterized currently and already generated intermediate data contain a similar content (for example, Japanese Patent Application Laid-Open No. 2004-192390). However, in the technique discussed in Japanese Patent Application Laid-Open No. 2004-192390, since the storage capacity for this caching is finite, it is difficult to store image data with respect to all reusable data which can be reused.

US 2006/0187488 describes a print server which functions as an image processing device, which extracts the reusable data of each object to be used on multiple pages within the file and prepared the form data by synthesizing the extracted reusable data. The print server prepares page data to be used for printing by synthesizing the prepared form data and the data of each object that is not contained in the form data.

EP 1306798 describes variable data printing that adds performance requirements to a raster image processor memory optimization that employs memory bands within the page composition process. Documents containing both recurring elements as well as non-recurring elements are sorted into element lists depending on their frequency of recurrence and their layering position. The recurring elements are retained in rasterized form, while the non-recurring elements are rasterized as they are used in output memory. One pass assembly in raster image processing of the elements occurs when the recurring elements are blitted into memory and the variable elements are ripped on the fly.

### SUMMARY OF THE INVENTION

The present invention in its first aspect provides a printing apparatus as specified in claims 1 to 5 .

The present invention in its second aspect provides a method as specified in claim 6.

The present invention in its third aspect provides a program as specified in claims 7 and 8. Such a program can be provided by itself or carried by a carrier medium. The carrier medium may be a recording or other storage medium. The carrier medium may also be a transmission medium. The transmission medium may be a signal.

The present invention in its fourth aspect provides a storage medium as specified in claim 9.

According to the present invention, it is possible to more appropriately manage data with respect to reusable data.

Further features and aspects of the present invention will become apparent from the following detailed description of exemplary embodiments with reference to the attached drawings.

### BRIEF DESCRIPTION OF THE DRAWINGS

The accompanying drawings, which are incorporated in and constitute a part of the specification, illustrate exemplary embodiments, features, and aspects of the invention and, together with the description, serve to explain the principles of the invention.
Fig. 1 illustrates a configuration of a network of a printing system
Fig. 2 illustrates an outer appearance of a multi function peripheral (MFP).
Fig. 3 is a block diagram illustrating a configuration of a personal computer (PC) and a configuration of the MFP.
Fig. 4 illustrates data related to variable printing.
Fig. 5 illustrates data related to variable printing.
Fig. 6 illustrates a flowchart of main processing in the MFP.
Fig. 7 illustrates a flowchart of cache method setting processing.
Fig. 8 illustrates an index indicating the priority order for storage.
Fig. 9 illustrates a flowchart of page data generation processing.
Fig. 10 illustrates a flowchart of print processing.
Fig. 11 illustrates a flowchart of cache deletion processing.
Fig. 12 illustrates a flowchart of normal processing.

### DESCRIPTION OF THE EMBODIMENTS

Various exemplary embodiments, features, and aspects of the invention will be described in detail below with reference to the drawings.

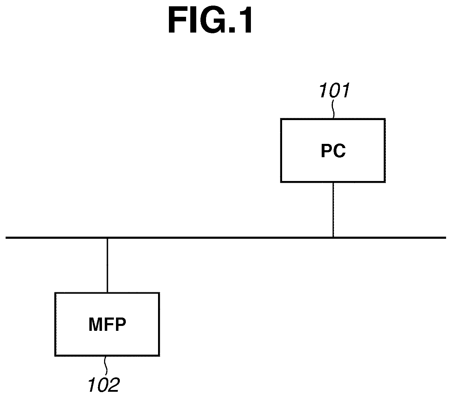

First, a network configuration of a printing system according to a present exemplary embodiment will be described with reference to Fig. 1. The printing system is configured to include a personal computer (PC) 101 and a multi function peripheral (MFP) 102. The PC 101 is an apparatus such as a host computer, and generates document data using, for example, an arbitrary application and generates print data (print job) from the document data using, for example, a printer driver. The PC 101 and the MFP 102 are communicably connected to each other through a network.

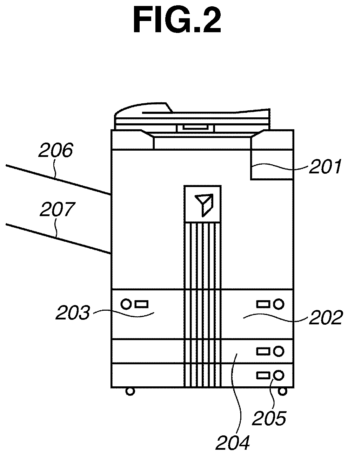

Next, the overview of the MFP 102 will be described with reference to Fig. 2. The MFP 102 is one example of a printing apparatus, and includes a main body 201, paper feed decks 202 and 203, paper feed cassettes 204 and 205, and paper discharge trays 206 and 207. Each of the paper feed decks 202 and 203 is disposed at the main body 201, and is configured in such a manner that papers for use in printing at the main body 201 can be set thereto. Each of the paper feed cassettes 204 and 205 is mounted on the main body 201, and is configured in such a manner that papers for use in printing at the main body 201 can be set thereto. Each of the paper discharge trays 206 and 207 is attached to the main body 201, and is configured in such a manner that papers printed at the main body 201 can be discharged thereto.

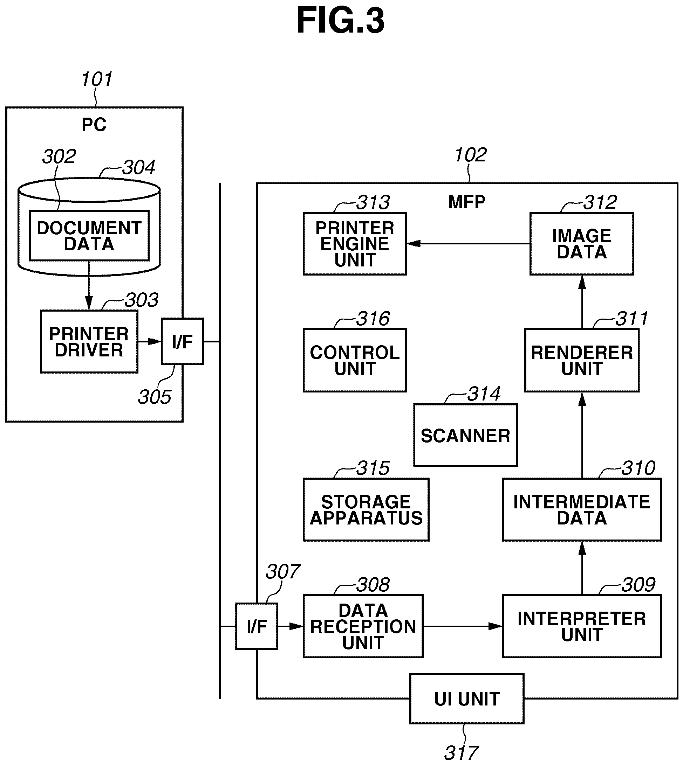

Next, the configuration of the PC 101 and the configuration of the MFP 102 will be described with reference to Fig. 3. The PC 101 includes a storage apparatus 304 and a communication interface (I/F) 305. The storage apparatus 304 stores, for example, document data 302, a program for causing a printer driver 303 to operate, and a program for causing a not-shown application (document generation application) for generating the document data 302 to operate. The communication interface 305 transmits print data generated by the printer driver 303 to, for example, the MFP 102, and mediates exchange of data between the PC 101 and, for example, the MFP 102. Here, the document data 302 is data generated by, for example, the document generation application which works on the PC 101. For example, the document data 302 is data in the Portable Document Format/Variable and Transactional (PDF/VT) format.

In the present exemplary embodiment, a central processing unit (CPU) (not shown) carries out processing according to the procedures of programs stored in the storage apparatus 304, which realizes the functions and various kinds of processing of the PC 101. For example, the CPU reads out the program for causing the document generation application to operate from the storage apparatus 304, and carries out processing according to the procedure of the read-out program, which realizes the document generation application. Further, for example, the CPU reads out the program for causing the printer driver 303 to operate, from the storage apparatus 304 and carries out processing according to the procedure of the read-out program, which realizes the printer driver 303. The printer driver 303 generates, for example, Page Description Language (PDL) data from the document data 302. Further, the printer driver 303 performs, for example, the settings of finishing control related to the MFP 102 to the document data 302. In the present exemplary embodiment, data generated by the printer driver 303 is referred to as "print data".

The MFP 102 includes a communication interface (I/F) 307, a scanner 314, and a storage apparatus 315. The communication interface 307 mediates exchange of various kinds of data between the MFP 102 and, for example, the PC 101. The scanner 314 scans document, and stores data with respect to the scanned document into the storage apparatus 315. The storage apparatus 315 stores (caches), for example, intermediate data 310 (e.g. intermediate page description language data) and image data 312 which will be described later. In the present exemplary embodiment, a CPU (not shown) reads out programs stored in the storage apparatus 315 and carries out processing according to the procedures of the read-out programs, which realizes the functions of the MFP 102 and processing of the MFP 102 illustrated in flowcharts which will be described later. The functions realized by the MFP 102 include, for example, a data reception unit 308, an interpreter unit 309, a renderer unit 311, a printer engine unit 313, a control unit 316, and a user interface (UI) unit 317. The data reception unit 308 receives, for example, print data transmitted from the PC 101. The interpreter unit 309 analyzes the print data received by the data reception unit 308. The interpreter unit 309 can analyze PDL such as PostScript (PS), Printer Control Language (PCL), and Laser beam printer Image Processing System (LIPS), and can analyze a format such as PDF and PDF/VT. The interpreter unit 309 analyses the print data to generate the intermediate data 310. The intermediate data 310 includes rendering objects such as "bitmap, run-length, trapezoid, box, and high-speed boundary encoded bitmap", background patterns, and rendering logic data to be used when the rendering objects and the background patterns are rendered on a raster memory. The renderer unit 311 analyzes the intermediate data 310, and converts it into the image data 312. The printer engine unit 313 converts the image data 312 into a video signal (not shown), and prints the image. The control unit 316 is in charge of main control of the MFP 102. The UI unit 317 is a user interface (for example, screen) for operating the MFP 102.

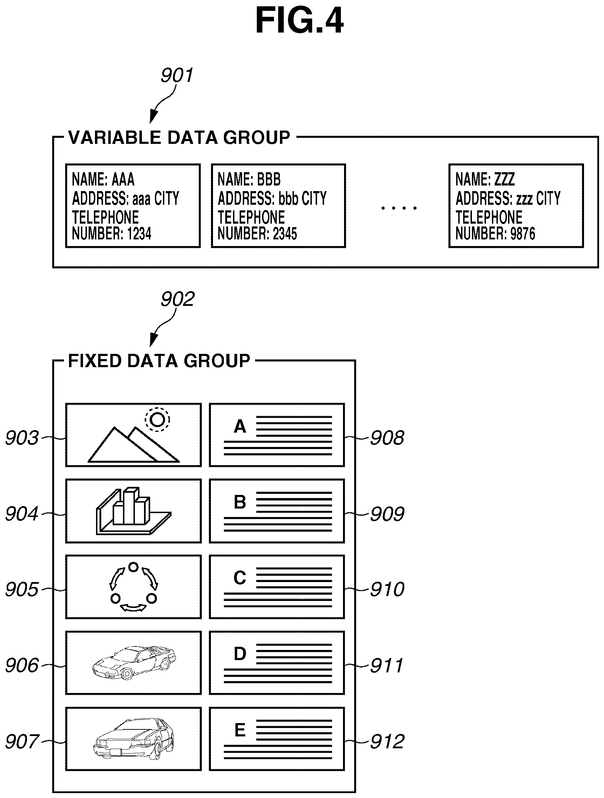

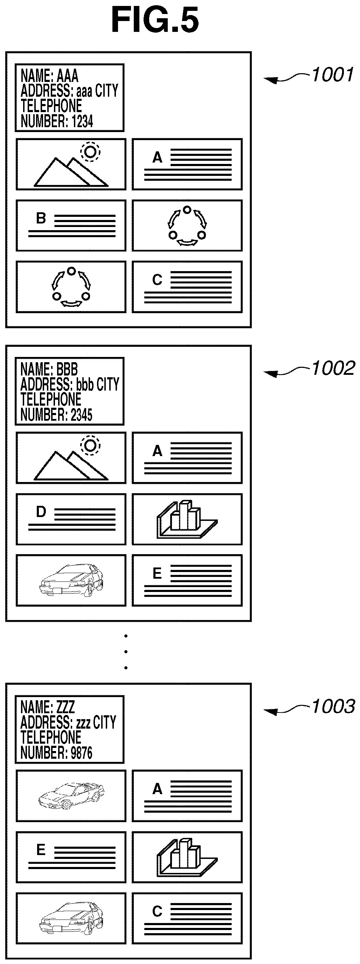

Next, data (for example, print data and page data) related to variable printing will be described with reference to Figs. 4 and 5. In the present exemplary embodiment, the MFP 102 generates one or more pieces of page data based on print data, and performs printing (variable printing). More specifically, upon reception of print data including a plurality of pieces of fixed data and variable data (e.g. the fixed data comprises static print data having content which may not vary within the same print job and/or between different print jobs; and the variable data comprises variable print data having content which can vary within the same print job and/or between different print jobs), the MFP 102 extracts the variable data and the fixed data from the received print data. Then, the MFP 102 generates the intermediate data 310 of the extracted variable data and fixed data as needed, and converts the generated intermediate data 310 into the image data 312 as needed. Subsequently, the MFP 102 stores the intermediate data 310 and the image data 312 as needed. The MFP 102 generates page data by combining, for example, the stored image data 312 and the converted image data 312, and performs printing. Fig. 4 illustrates an example of a variable data group 901 including the plurality of pieces of variable data extracted from the print data, and an example of a fixed data group 902 including the plurality of pieces of fixed data extracted from the print data. In the present exemplary embodiment, the variable data group 901 includes the plurality of pieces of variable data (Z pieces: Z is a positive integer), and each variable data has name information, address information, and telephone number information. Each variable data is handled as an object. On the other hand, the fixed data group 902 includes the plurality of pieces of fixed data (in this example, fixed data 903 to fixed data 912). The fixed data 903 to 905 mainly include graphics objects. The fixed data 906 and 907 mainly include image objects. The fixed data 908 to 912 mainly include text objects. Here, there are two types of objects, i.e., reusable object for repeated use, and non-reusable object for one-time use. Further, there are three types of reusable objects. The first type is a within-page -reusable object which is valid within a corresponding page. The second type is a within-j ob-reusable object which is valid within a corresponding job. The third type is a global reusable object which is valid even outside a corresponding job.

Then, as illustrated in Fig. 5, the MFP 102 generates page data by combining the image data 312 concerning the variable data group 901 and the image data 312 concerning the fixed data group 902. The page data is an example of print page data, and there are a number of pages equal to the number of pieces of data prepared in the variable data group 901 (in this example, Z pages) . The page data 1001 is an example of the page data generated by combining the image data 312 concerning the fixed data 903, 905, 908, 909, and 910, and the image data 312 concerning the variable data. The page data 1002 is an example of the page data generated by combining the image data 312 concerning the fixed data 903, 904, 907, 908, 911, and 912, and the image data 312 concerning the variable data. The page data 1003 is an example of the page data generated by combining the image data 312 concerning the fixed data 904, 906, 907, 908, 910, and 912, and the image data 312 concerning the variable data.

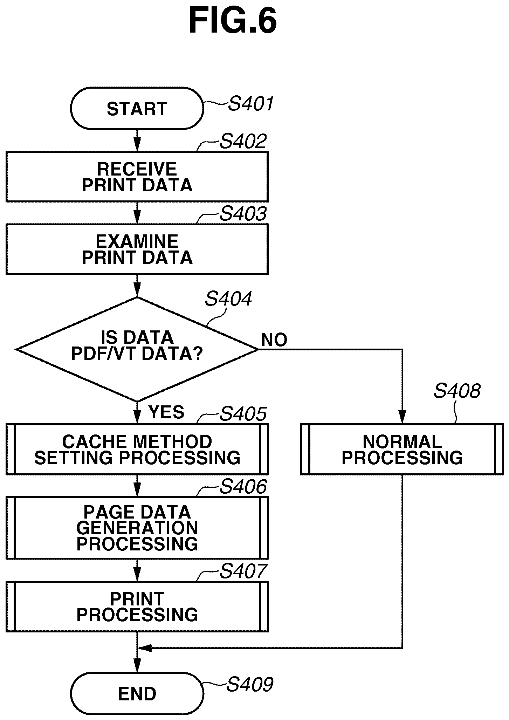

The overall flow of processing for variable printing performed by the MFP 102 will be now described with reference to the flowchart illustrated in Fig. 6. First, in step S401, the control unit 316 starts the processing upon reception of, for example, an instruction from the communication interface 307. Then, in step S402, the data reception unit 308 receives print data generated by the printer driver 303 of the PC 101. Next, in step S403, the control unit 316 examines the type of the print data received in step S402. Subsequently, in step S404, the control unit 316 determines whether the print data is in the PDF/VT format. More specifically, if the control unit 316 determines that the type of the print data is PDF, the control unit 316 analyzes the content of the PDF data. The control unit 316 may determine that the print data is PDF data by referring to the extension thereof (pdf), or from the result of analysis of the content of the PDF data. Then, the control unit 316 examines whether the PDF data contains a metadata key which indicates that the data is in the PDF/VT format. If the control unit 316 determines that the print data being analyzed currently is in the PDF/VT format (YES in step S404), then, the operation proceeds to step S405. On the other hand, if the control unit 316 determines that the print data being analyzed currently is not in the PDF/VT format (NO in step S404), subsequently, the operation proceeds to step S408.

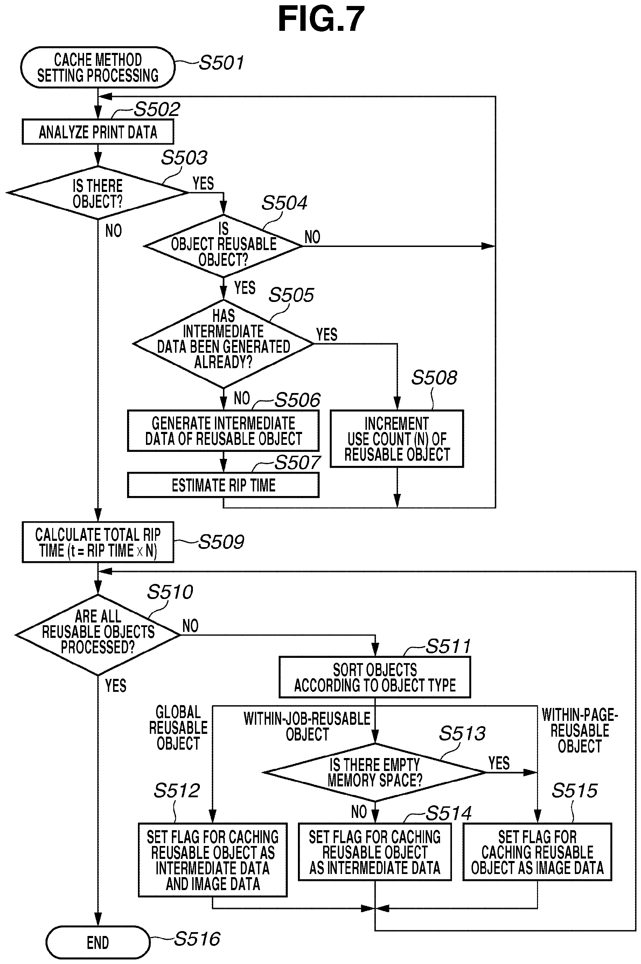

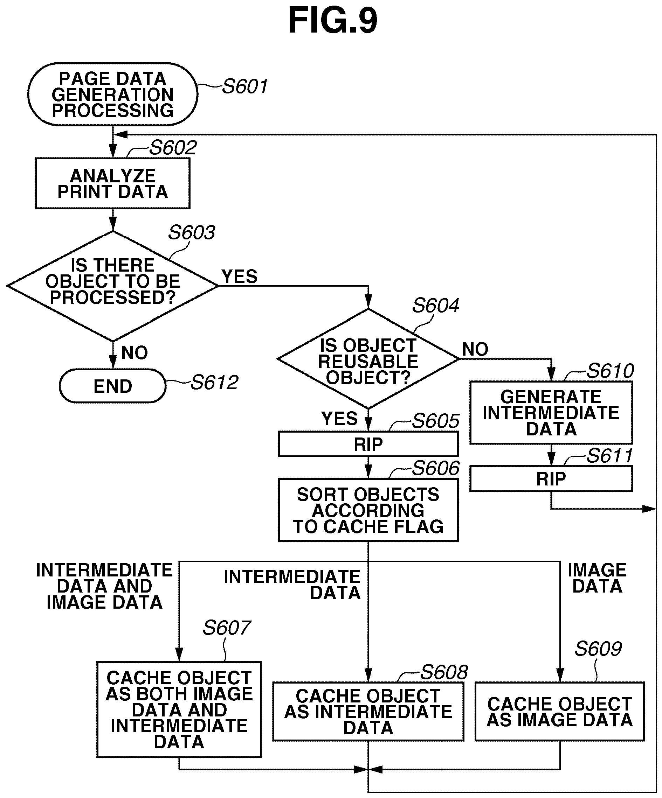

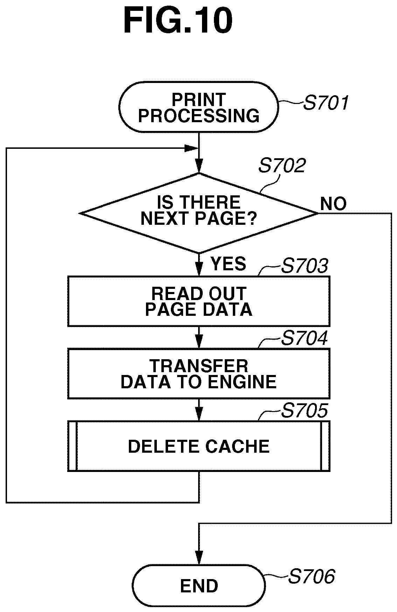

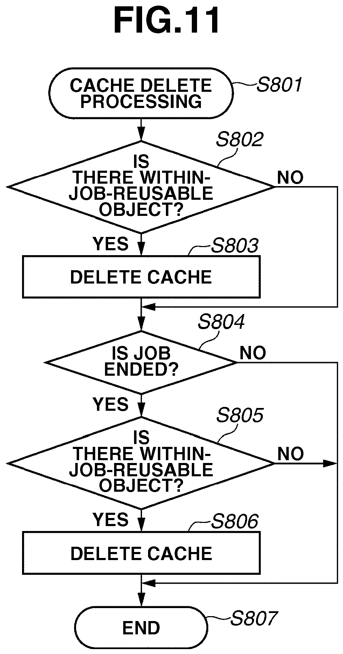

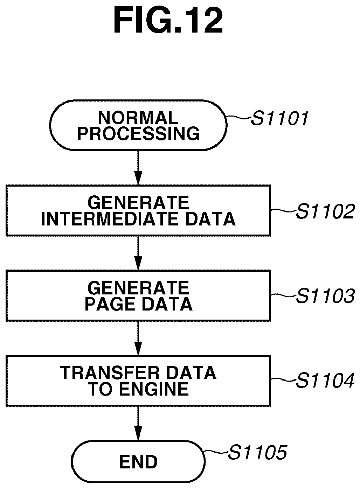

In step S405, the control unit 316 sets a cache method with respect to reusable object data existing in the print data to speed up the print processing. The details of the cache method setting processing will be described later with reference to the flowchart illustrated in Fig. 7. In step S406, the control unit 316 generates page data for printing by the printer engine unit 313. Page data includes a set of pieces of image data 312. The details of the page data generation processing will be described later with reference to the flowchart illustrated in Fig. 9. In step S407, the control unit 316 prints the page data generated in step S406 using the printer engine unit 313. The details of the print processing will be described later with reference to the flowchart illustrated in Fig. 10. Further, the print processing contains cache deletion processing for deleting data with respect to reusable objects stored in the storage apparatus 315 as needed. The details of the cache deletion processing will be described later with reference to the flowchart illustrated in Fig. 11. In step S408, the control unit 316 performs print processing in a normal manner. The details of the normal processing will be described later with reference to the flowchart illustrated in Fig. 12. In step S409, the control unit 316 ends the processing for variable printing.

Now, the cache method setting processing will be described with reference to Fig. 7. First, in step S502, the interpreter unit 309 analyzes the print data received in step S402. The interpreter unit 309 in this case is a PDF/VT interpreter. In step S503, the control unit 316 determines whether there is any object data in the print data analyzed in step S502. If there is object data (YES in step S503), the control unit 316 subsequently performs the processing of step S504. On the other hand, if there is no object data (NO in step S503), the control unit 316 subsequently performs the processing of step S509.

In step S504, the control unit 316 determines whether the object data processed in step S502 is reusable object data. If the object data is reusable object data (YES in step S504), the control unit 316 subsequently performs the processing of step S505. On the other hand, if the object data is not reusable object data (NO in step S504), subsequently, the operation proceeds to step S502. In step S505, the control unit 316 determines whether the intermediate data 310 of the reusable object has been already generated. If the control unit 316 determines that the intermediate data 310 has been already generated (YES in step S505), the control unit 316 subsequently performs the processing of step S508. On the other hand, if the control unit 316 determines that the intermediate data 310 is not yet generated (NO in step S505), subsequently, the operation proceeds to step S506.

In step S506, the interpreter unit 309 generates the intermediate data 310 from the reusable object data contained in the print data. In step S507, the control unit 316 performs a raster image processor (RIP) time estimation of the generated intermediate data 310. The term "RIP" refers to the processing in which the renderer unit 311 converts the intermediate data 310 into the image data 312. Further, the term "RIP time estimation" refers to the processing in which the control unit 316 estimates a time that the renderer unit 311 will take to convert the intermediate data 301 into the image data 312. Mainly, there are two methods for this estimation. One of them is that the control unit 316 analyzes the configuration of the intermediate data 310 and estimates the RIP time according to the analyzed configuration with use of a preset time. The other method is to measure only a time that the renderer unit 311 spent to convert the intermediate data 310 to the image data 312. In this method, for example, the time required for storing the image data 312 into the storage apparatus 315 (image data storage unit) by the control unit 316 is not counted as the RIP time. The present exemplary embodiment employs the second method as the method for the measurement by the control unit 316. After that, the operation proceeds to step S502.

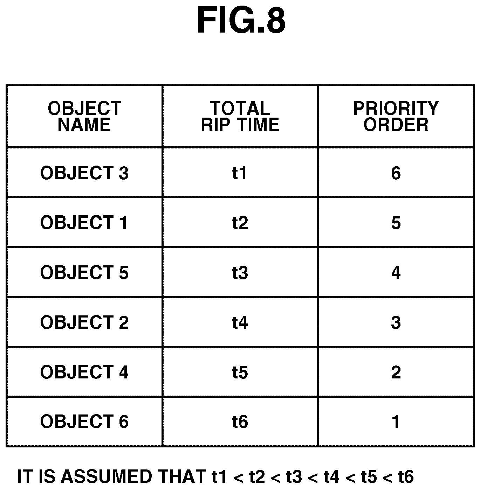

If the control unit 316 determines that the intermediate data 310 has been already generated (YES in step S505), the operation proceeds to step S508. In step S508, the control unit 316 increments a counter N (integer value) which indicates how many times the reusable object is referred to. In other words, the control unit 316 keeps count of how many times the reusable object is referred to. The counter N is installed in the storage apparatus 315. Then, the operation proceeds to step S502. In step S509, the control unit 316 calculates a total RIP time (t) for each reusable object from the RIP time estimated in step S507 and the counter N incremented in step S508. The total RIP time (t) for each reusable object is calculated by multiplying the RIP time for each reusable object by the counter N for each reusable object. At this time, the control unit 316 assigns a priority order (order) to the reusable object according to the total RIP time, as illustrated in Fig. 8. More specifically, the control unit 316, which is an example of an order assigning means, sets a higher priority order to reusable object having a longer time as the total RIP time, and stores it in the storage unit 315 in such a manner that the reusable object and the priority order are associated with each other. The priority order is an index for determining which within-job-reusable object should be set to give higher priority for storage of the image data thereof into the storage apparatus 315, when there is a plurality of within-j ob-reusable objects in print data. Fig. 8 indicates, for example, that the total RIP time t1 is shorter than the total RIP time t2, and the object 6 is given the highest priority among the objects 1 to 6.

Then, in step S510, the control unit 316 determines whether the cache method determination is completed for all reusable objects. If the cache method determination is completed for all reusable objects (YES in step S510), the operation proceeds to step S516. In step S516, the cache method setting processing is ended. On the other hand, if the cache method determination is not yet completed for any of reusable object (NO in step S510), the control unit 316 subsequently performs the processing of step S511. In step S511, the control unit 316 sorts the reusable objects according to the object types. Examples of the object types include within-page-reusable object which can be reused within a page (within print page data) . Examples of the object types further include within-job-reusable object which is valid within a job (within a corresponding print job). Examples of the object types further include global reusable object which is valid even outside a job (outside a corresponding print job). The fixed data 905 illustrated in Fig. 4 which is an example of reusable data, for example, is defined as a within-page-reusable object in the print data. The fixed data 903, 904, 906, 908, 909, 910, and 911, which are an example of reusable data, are defined as within-job-reusable objects in the print data. The fixed data 907, which is an example of reusable data, is defined as a global reusable object in the print data. If the control unit 316 determines that the object being processed currently is a global reusable object, the control unit 316 subsequently performs the processing of step S512. If the control unit 316 determines that the object being processed currently is a within-job-reusable object, the control unit 316 subsequently performs the processing of step S513. If the control unit 316 determines that the object being processed currently is a within-page-reusable object, the control unit 316 subsequently performs the processing of step S515.

In step S512, the control unit 316 sets a flag (cache flag) for storing the global reusable object as the intermediate data 310 and the image data 312. The global reusable object is an object valid even outside the job, and therefore if only the image data 312 thereof is cached in the storage apparatus 315, it cannot be regenerated (reproduced) when the state of the printer engine unit 313 is changed. The control unit 316 solves this problem by not deleting the intermediate data 310, and storing both of the intermediate data 310 and the image data 312 into the storage apparatus 315. Therefore, the control unit 316 sets the cache flag for storing the intermediate data 310 and the image data 312 into the storage apparatus 315, and stores the cache flag into the storage apparatus 315. The state of the printer engine unit 313 is changed, for example, when a different printer engine is used, or various print settings (for example, paper size and print range) are changed for another print job.

In step S513, the control unit 316 determines whether there is an empty memory space (remaining capacity) in the storage apparatus 315. The within-job-reusable object is valid only within the job, and therefore it is deleted when the job is ended. Further, since the within-job-reusable object is valid within the job, it is expected that there are plenty of within-job-reusable objects. Therefore, caching all within-job-reusable objects into the storage apparatus 315 as the image data 312 may be impossible. Therefore, the control unit 316 operates to store the image data 312 into the storage apparatus 315 in descending order of the total RIP time (t) (in order of the priority) of reusable object calculated in step S509. In other words, if the control unit 316 determines that the within-job-reusable object can be stored into the storage apparatus 315 as the image data 312 (YES in step S513), the control unit 316 subsequently performs the processing of step S515. On the other hand, if the control unit 316 determines that the within-job-reusable object cannot be stored into the storage apparatus 315 as the image data 312 (NO in step S513), the control unit 316 subsequently performs the processing of step S514. In step S514, the control unit 316 sets a cache flag for storing the reusable object as the intermediate data 310, and stores the cache flag into the storage apparatus 315. In step S515, the control unit 316 sets a cache flag for storing the reusable object as the image data 312, and stores the cache flag into the storage apparatus 315.

Another possible method is to cache all of the within-job-reusable objects and the within-page-reusable objects in the print data as the intermediate data 310 (for example, the display list and the intermediate language) in the MFP 102. This method can reduce the occupancy of the storage area, but reusable objects having a complicated configuration (for example, logic rendering of a graphic) may take much time for conversion of the intermediate data 310 into the image data 312 (RIP). Therefore, the present exemplary embodiment employs the method of caching data with respect to a reusable object in consideration of the number of times of reference to the reusable object, and the RIP time of the reusable object in print data. In other words, it is possible to shorten a print time and prevent the constant depletion of the memory space in the MFP 102 by controlling whether a reusable object is cached as the intermediate data 310 or the image data 312. Data with respect to a reusable object is, for example, the intermediate data 310 and the image data 312.

Next, the page data generation processing will be described with reference to the flowchart illustrated in Fig. 9. First, in step S602, the interpreter unit 309 analyzes the print data. Subsequently, in step S603, the control unit 316 determines whether there is any object that should be processed based on the result of step S602. If the control unit 316 determines that there is an object that should be processed (YES in step S603), the control unit 316 subsequently performs the processing of step S604. On the other hand, if the control unit 316 determines that there is no object that should be processed (NO in step S603), the operation proceeds to step S612. In step S612, the page data generation processing is ended.

In step S604, the control unit 316 determines whether the object determined as an object required to be processed in step S603 is a reusable object. The term "reusable object" refers to a repeatedly used object in the fixed data group 902 illustrated in Fig. 4. If the object is a reusable object (YES in step S604), subsequently, the operation proceeds to step S605. On the other hand, if the object is not a reusable object (NO in step S604), subsequently, the operation proceeds to step S610.

In step S605, the renderer unit 311 converts the intermediate data 310 generated in step S506 into the image data 312 (RIP). In step S606, the control unit 316 reads out the cache flag set in any of step S512, S514, and S515 from the storage apparatus 315. If the value of the cache flag is set to the value indicating "intermediate data 310 and image data 312", subsequently, the operation proceeds to step S607. If the value of the cache flag is set to the value indicating "intermediate data 310", subsequently, the operation proceeds to step S608. If the value of the cache flag is set to the value indicating "image data 312", subsequently, the operation proceeds to step S609.

In step S607, the control unit 316 stores the intermediate data 310 and the image data 312 into the storage apparatus 315 according to the value of the cache flag. In step S608, the control unit 316 stores the intermediate data 310 into the storage apparatus 315 according to the value of the cache flag. In step S609, the control unit 316 stores the image data 312 into the storage apparatus 315 according to the value of the cache flag. On the other hand, in step S610, the interpreter unit 309 converts the non-reusable object into the intermediate data 310. Subsequently, in step S611, the renderer unit 311 converts the intermediate data 310 into image data 312 (RIP) .

After the completion of the processing of step S607, S608, or S609, the control unit 316 reads out the data according to the type of the reusable object from the storage apparatus 315 to acquire the image data 312 of the reusable object. At this time, if the reusable object is a global reusable object, the read-out data is the intermediate data 310 or the image data 312. More specifically, if the control unit 316 detects that the state of the printer engine unit 313 experiences a change, the control unit 316 reads out the intermediate data 310. If the control unit 316 does not detect that the state of the printer engine unit 313 experiences a change, the control unit 316 reads out the image data 312. If the reusable object is a within-job-reusable object, the read-out data is the intermediate data 310 or the image data 312. If the reusable object is a within-page-reusable object, the read-out data is the image data 312. In the case that the control unit 316 reads out the intermediate data 310, the renderer unit 311 converts the read-out intermediate data 310 into the image data 312. Then, the control unit 316 generates page data by combining the image data 312 read-out or converted for each object as mentioned above, and the image data 312 converted in step S611, and then stores the generated page data into the storage apparatus 315.

Next, the details of the print processing will be described with reference to the flowchart illustrated in Fig. 10. First, in step S702, the control unit 316 determines whether there is page data which is a set of pieces of image data 312. It is assumed that page data is stored in order starting from the first page. If the control unit 316 determines that there is page data to be read out (YES in step S702), the control unit 316 subsequently performs the processing of step S703. On the other hand, if the control unit 316 determines that there is no page data to be read out (NO in step S702), the operation proceeds to step S706. In step S706, the control unit 316 ends the print processing.

In step S703, the control unit 316 reads out page data. Then, in step S704, the control unit 316 transmits the page data read out in step S703 to the printer engine unit 313 as a video signal, according to which the printer engine unit 313 prints the image on a paper. Then, the control unit 316 discharges the result of the printing by the printer engine unit 313 onto the paper discharge destination (the discharge tray 206 or 207) . Subsequently, in step S705, the control unit 316 performs the cache deletion processing. In the cache deletion processing, if there is a no longer required object in the cache, the processing for deleting the object no longer required is performed. The details of the cache deletion processing will be described below with reference to the flowchart illustrated in Fig. 11.

Now, the cache deletion processing will be described with reference to the flowchart illustrated in Fig. 11. The cache deletion processing is performed each time printing of a page is completed (step S705) . In other words, in the cache deletion processing, the cache of data with respect to a reusable object that is no longer required is deleted at appropriate timing according to the type of the object (the type of the reusable object) . First, in step S802, the control unit 316 determines based on the cache flag whether the objects used for the current page contain any within-page-reusable object. If the control unit 316 determines that the objects used for the current page contain a within-page-reusable object (YES in step S802), the operation proceeds to step S803. In step S803, the control unit 316 deletes the data with respect to the within-page-reusable object stored in the storage apparatus 315, and then performs the processing of step S804. On the other hand, if the control unit 316 determines that the objects used for the current page do not contain a within-page -reusable object (NO in step S802), the control unit 316 subsequently performs the processing of step S804.

In step S804, the control unit 316 determines whether the current page is the last page in the job. If the control unit 316 determines that the current page is the last page in the job (YES in step S804), the control unit 316 subsequently performs the processing of step S805. On the other hand, if the control unit 316 determines that the current page is not the last page in the job (NO in step S804), the operation proceeds to step S807. In step S807, the cache deletion processing is ended. In step S805, the control unit 316 determines based on the cache flag whether the objects used for the current print job contain any within-job-reusable object. If the control unit 316 determines that the objects used for the current print job contain a within-job-reusable object (YES in step S805), then the operation proceeds to step S806. In step S806, the control unit 316 deletes the data with respect to the within-j ob-reusable object stored in the storage apparatus 315. Subsequently, the operation proceeds to step S807 in which the cache deletion processing is ended. On the other hand, if the control unit 316 determines that the objects used for the current print job do not contain any within-j ob-reusable object (NO in step S805), the operation proceeds to step S807 in which the cache deletion processing is ended.

Next, the normal processing will be described with reference to the flowchart illustrated in Fig. 12. It is assumed that the normal processing is performed when the control unit 316 processes print data that is not PDF/VT data. First, in step S1102, the interpreter unit 309 generates the intermediate data 310 by analyzing the print data received in step S402. Subsequently, in step S1103, the renderer unit 311 converts the intermediate data 310 into the image data 312. Then, in step 1104, the control unit 316 converts the image data 312 into a video signal, and transfers it to the printer engine unit 313. After that, in step S1105, the control unit 316 discharges the result of the printing by the printer engine unit 313 to the paper discharge destination (the discharge tray 206 or 207) . The normal processing is ended with this paper discharge.

### <OTHER EXEMPLARY EMBODIMENTS>

Further, the present invention can be also embodied by performing the following procedure. More specifically, a software (or program) capable of carrying out the functions of the above-described exemplary embodiment is supplied to a system or an apparatus through a network or various kinds of storage media, and a computer (or, for example, a CPU or micro processing unit (MPU)) of the system or the apparatus reads out and executes the program.

Further, the present invention can be also embodied by performing the following procedure. That is, a software (or program) capable of carrying out the functions of the above-described exemplary embodiments is supplied to a system or an apparatus through a network or various kinds of storage media, and a computer (or, for example, a CPU or an MPU) of the system or the apparatus reads out and executes the program. In such a case, the program, and the storage medium storing the program are included as being within the scope of the present invention.

## Claims

1. A printing apparatus comprising:
a generation means configured, based on a print job containing at least one piece of reusable data and variable data, to generate a corresponding piece of intermediate data (310) for the or each piece of reusable data;
a conversion means configured to convert the or each piece of intermediate data (310) generated by the generation means into a corresponding piece of image data (312); and
a storage means (315) configured, for each piece of reusable data, to select and store the corresponding piece of intermediate data (310) and/or the corresponding piece of image data (312) according to a type of the reusable data which indicates whether the reusable data is to be reused in the print job and/or another print job,
wherein the storage means (315) is configured, for each piece of reusable data, to store the corresponding piece of image data (312) of the reusable data if the type of the reusable data indicates that the reusable data is to be reused within a print page of the print job, or to store the corresponding piece of intermediate data (310) of the reusable data if the type of the reusable data indicates that the reusable data is to be reused within the print job, and,
wherein the storage means (315) is configured, for each piece of reusable data, to store the corresponding piece of intermediate data (310) and the corresponding piece of image data (312) of the reusable data if the type of the reusable data indicates that the reusable data can be reused in at least one further print job.

2. The printing apparatus according to claim 1, wherein the storage means (315) is configured, for each piece of reusable data, to store information related to the reusable data based on a frequency of reuse of the reusable data in the print job and/or based on a converting time for converting a piece of intermediate data into a piece of image data.

3. The printing apparatus according to claim 1 or 2, further comprising an acquisition means configured to acquire a total conversion time for each piece of reusable data,
wherein the total conversion time is a time indicating a total time required for the conversion of a piece of intermediate data (310) corresponding to a piece of reusable data into a piece of image data (312) by the conversion means for the number of times that the piece of reusable data is used in the print job,
wherein the storage means (315) is configured to store the image data (312) by prioritizing the reusable data having a longer time as the total conversion time acquired by the acquisition means.

4. The printing apparatus according to any one of the preceding claims, wherein the type of the piece of reusable data specifies a usage range in which reuse of the piece of reusable data is valid.

5. The printing apparatus according to claim 4, further comprising a deletion means configured, upon completion of reuse of the piece of reusable data in the specified range, to delete the corresponding piece of intermediate data (310) or the corresponding piece of image data (312) stored in the storage means (315),
wherein the storage means (315) is configured to prioritize storage of pieces of image data (312) corresponding to pieces of reusable data by prioritizing the type of the piece of reusable data having a narrow range as the range in which the reusable data is to be reused.

6. A printing method comprising:
generating, based on a print job containing at least one piece of reusable data and variable data, a corresponding piece of intermediate data (310) for the or each piece of reusable data;
converting the or each piece of generated intermediate data (310) into a corresponding piece of image data (312) ; and
selecting and storing, for each piece of reusable data, the corresponding piece of intermediate data (310) and/or the corresponding piece of image data (312) according to a type of the reusable data which indicates whether the reusable data is to be reused in the print job and/or another print job,
wherein, for each piece of reusable data, the corresponding piece of image data (312) of the reusable data is stored if the type of the reusable data indicates that the reusable data is to be reused within a print page of the print job, or the corresponding piece of intermediate data (310) of the reusable data is stored if the type of the reusable data indicates that the reusable data is to be reused within the print job, and,
wherein, for each piece of reusable data, the corresponding piece of intermediate data (310) and the corresponding piece of image data (312) of the reusable data are stored if the type of the reusable data indicates that the reusable data can be reused in at least one further print job.

7. A program which, when executed by a computer, causes the computer to carry out the method of claim 6.

8. A program which, when loaded into a computer, causes the computer to become the printing apparatus of any one of claims 1 to 5.

9. A storage medium storing the computer program according to claim 7 or 8.

## Patentansprüche

1. Druckvorrichtung, umfassend:
eine Erzeugungseinrichtung, die konfiguriert ist, basierend auf einem Druckauftrag, der zumindest einen Teil wiederverwendbarer Daten und variable Daten enthält, zum Erzeugen eines entsprechenden Teils von Zwischendaten (310) für die oder einen jeweiligen Teil der wiederverwendbaren Daten;
eine Umwandlungseinrichtung, die konfiguriert ist zum Umwandeln des oder des jeweiligen durch die Erzeugungseinrichtung erzeugten Teils der Zwischendaten (310) in einen entsprechenden Teil von Bilddaten (312); und
eine Speichereinrichtung (315), die konfiguriert ist, für einen jeweiligen Teil der wiederverwendbaren Daten, zum Auswählen und Speichern des entsprechenden Teils der Zwischendaten (310) und/oder des entsprechenden Teils der Bilddaten (312) gemäß einer Art der wiederverwendbaren Daten, die angibt, ob die wiederverwendbaren Daten im Druckauftrag und/oder einem anderen Druckauftrag wiederzuverwenden sind,
wobei die Speichereinrichtung (315) konfiguriert ist, für einen jeweiligen Teil der wiederverwendbaren Daten, zum Speichern des entsprechenden Teils der Bilddaten (312) der wiederverwendbaren Daten, falls die Art der wiederverwendbaren Daten angibt, dass die wiederverwendbaren Daten innerhalb einer Druckseite des Druckauftrags wiederzuverwenden sind, oder zum Speichern des entsprechenden Teils der Zwischendaten (310) der wiederverwendbaren Daten, falls die Art der wiederverwendbaren Daten angibt, dass die wiederverwendbaren Daten innerhalb des Druckauftrags wiederzuverwenden sind, und
wobei die Speichereinrichtung (315) konfiguriert ist, für einen jeweiligen Teil der wiederverwendbaren Daten, zum Speichern des entsprechenden Teils der Zwischendaten (310) und des entsprechenden Teils der Bilddaten (312) der wiederverwendbaren Daten, falls die Art der wiederverwendbaren Daten angibt, dass die wiederverwendbaren Daten in zumindest einem weiteren Druckauftrag wiederverwendet werden können.

2. Druckvorrichtung nach Anspruch 1, wobei die Speichereinrichtung (315) konfiguriert ist, für einen jeweiligen Teil der wiederverwendbaren Daten, zum Speichern von Information bezüglich der wiederverwendbaren Daten, basierend auf einer Wiederverwendungshäufigkeit der wiederverwendbaren Daten im Druckauftrag und/oder basierend auf einer Umwandlungszeit zum Umwandeln eines Teils der Zwischendaten in einen Teil der Bilddaten.

3. Druckvorrichtung nach Anspruch 1 oder 2, ferner umfassend eine Erfassungseinrichtung, die konfiguriert ist zum Erfassen einer Gesamtumwandlungszeit für einen jeweiligen Teil der wiederverwendbaren Daten,
wobei die Gesamtumwandlungszeit eine Zeit ist, die eine Gesamtzeit angibt, die für die Umwandlung eines Teils der Zwischendaten (310) entsprechend einem Teil der wiederverwendbaren Daten in einen Teil der Bilddaten (312) durch die Umwandlungseinrichtung erforderlich ist, für die Anzahl Male, bei denen der Teil der wiederverwendbaren Daten im Druckauftrag verwendet wird,
wobei die Speichereinrichtung (315) konfiguriert ist zum Speichern der Bilddaten (312) durch Priorisieren der wiederverwendbaren Daten, die eine längere Zeit als die durch die Erfassungseinrichtung erfasste Gesamtumwandlungszeit aufweisen.

4. Druckvorrichtung nach einem der vorangegangenen Ansprüche, wobei die Art des Teils der wiederverwendbaren Daten einen Verwendungsbereich, in dem die Wiederverwendung des Teils der wiederverwendbaren Daten gültig ist, spezifiziert.

5. Druckvorrichtung nach Anspruch 4, ferner umfassend eine Löschungseinrichtung, die konfiguriert ist, bei Abschluss der Wiederverwendung des Teils der wiederverwendbaren Daten im spezifischen Bereich, zum Löschen des in der Speichereinrichtung (315) gespeicherten entsprechenden Teils der Zwischendaten (310) oder des entsprechenden Teils der Bilddaten (312),
wobei die Speichereinrichtung (315) konfiguriert ist zum Priorisieren des Speicherns des Teils der Bilddaten (312) entsprechend Teilen der wiederverwendbaren Daten durch Priorisieren der Art des Teils der wiederverwendbaren Daten, die als den Bereich, in dem die wiederverwendbaren Daten wiederzuverwenden sind, einen schmalen Bereich aufweisen.

6. Druckverfahren, umfassend:
Erzeugen, basierend auf einem Druckauftrag, der zumindest einen Teil wiederverwendbarer Daten und variable Daten enthält, eines entsprechenden Teils der Zwischendaten (310) für die oder einen jeweiligen Teil der wiederverwendbaren Daten;
Umwandeln der oder des jeweiligen erzeugten Teils der Zwischendaten (310) in einen entsprechenden Teil der Bilddaten (312); und
Auswählen und Speichern, für einen jeweiligen Teil der wiederverwendbaren Daten, des entsprechenden Teils der Zwischendaten (310) und/oder des entsprechenden Teils der Bilddaten (312) gemäß einer Art der wiederverwendbaren Daten, die angibt, ob die wiederverwendbaren Daten im Druckauftrag und/oder einem anderen Druckauftrag wiederzuverwenden sind,
wobei, für einen jeweiligen Teil der wiederverwendbaren Daten der entsprechende Teil der Bilddaten (312) der wiederverwendbaren Daten gespeichert wird, falls die Art der wiederverwendbaren Daten angibt, dass die wiederverwendbaren Daten innerhalb einer Druckseite des Druckauftrags wiederzuverwenden sind, oder der entsprechende Teil der Zwischendaten (310) der wiederverwendbaren Daten gespeichert wird, falls die Art der wiederverwendbaren Daten angibt, dass die wiederverwendbaren Daten innerhalb des Druckauftrags wiederzuverwenden sind, und
wobei für einen jeweiligen Teil der wiederverwendbaren Daten der entsprechende Teil der Zwischendaten (310) und der entsprechende Teil der Bilddaten (312) der wiederverwendbaren Daten gespeichert werden, falls die Art der wiederverwendbaren Daten angibt, dass die wiederverwendbaren Daten in zumindest einem weiteren Druckauftrag wiederverwendet werden können.

7. Programm, das bei Ausführung durch einen Computer diesen dazu veranlasst, das Verfahren nach Anspruch 6 auszuführen.

8. Programm, das bei Laden in einen Computer, diesen dazu veranlasst, die Druckvorrichtung nach einem der Ansprüche 1 bis 5 zu werden.

9. Speichermedium, das das Computerprogramm nach Anspruch 7 oder 8 speichert.

## Revendications

1. Appareil d'impression, comprenant :
un moyen de génération configuré, sur la base d'une tâche d'impression contenant au moins un élément de données réutilisables et de données variables, pour générer un élément correspondant de données intermédiaires (310) pour l'élément ou chaque élément de données réutilisables ;
un moyen de conversion configuré pour convertir l'élément ou chaque élément de données intermédiaires (310) généré par le moyen de génération en un élément correspondant de données d'image (312) ; et
un moyen de mémorisation (315) configuré, pour chaque élément de données réutilisables, pour sélectionner et mémoriser l'élément correspondant de données intermédiaires (310) et/ou l'élément correspondant de données d'image (312) conformément à un type des données réutilisables qui indique s'il convient de réutiliser, ou non, les données réutilisables pour la tâche d'impression et/ou pour une autre tâche d'impression,
dans lequel le moyen de mémorisation (315) est configuré, pour chaque élément de données réutilisables, pour mémoriser l'élément correspondant de données d'image (312) des données réutilisables si le type des données réutilisables indique qu'il convient de réutiliser les données réutilisables dans une page d'impression de la tâche d'impression, ou pour mémoriser l'élément correspondant de données intermédiaires (310) des données réutilisables si le type des données réutilisables indique qu'il convient de réutiliser les données réutilisables pour la tâche d'impression, et
dans lequel le moyen de mémorisation (315) est configuré, pour chaque élément de données réutilisables, pour mémoriser l'élément correspondant de données intermédiaires (310) et l'élément correspondant de données d'image (312) des données réutilisables si le type des données réutilisables indique qu'il est possible de réutiliser les données réutilisables pour au moins une tâche d'impression supplémentaire.

2. Appareil d'impression selon la revendication 1, dans lequel le moyen de mémorisation (315) est configuré, pour chaque élément de données réutilisables, pour mémoriser des informations se rapportant aux données réutilisables sur la base d'une fréquence de réutilisation des données réutilisables pour la tâche d'impression et/ou sur la base d'un temps de conversion permettant de convertir un élément de données intermédiaires en un élément de données d'image.

3. Appareil d'impression selon la revendication 1 ou 2, comprenant en outre un moyen d'acquisition configuré pour acquérir un temps de conversion total de chaque élément de données réutilisables,
dans lequel le temps de conversion total est un temps indiquant un temps total nécessaire à la conversion d'un élément de données intermédiaires (310) correspondant à un élément de données réutilisables en un élément de données d'image (312) par le moyen de conversion par rapport au nombre d'utilisations de l'élément de données réutilisables pour la tâche d'impression,
dans lequel le moyen de mémorisation (315) est configuré pour mémoriser les données d'image (312) en attribuant une priorité aux données réutilisables ayant un temps plus long en tant que temps de conversion total acquis par le moyen d'acquisition.

4. Appareil d'impression selon l'une quelconque des revendications précédentes, dans lequel le type de l'élément de données réutilisables spécifie une plage d'utilisation de validité de réutilisation de l'élément de données réutilisables.

5. Appareil d'impression selon la revendication 4, comprenant en outre un moyen de suppression configuré, lors d'une exécution de réutilisation de l'élément de données réutilisables dans la plage spécifiée, pour supprimer l'élément correspondant de données intermédiaires (310) ou l'élément correspondant de données d'image (312) mémorisé dans le moyen de mémorisation (315),
dans lequel le moyen de mémorisation (315) est configuré pour attribuer une priorité à une mémorisation d'éléments de données d'image (312) correspondant à des éléments de données réutilisables en attribuant une priorité au type de l'élément de données réutilisables ayant une plage étroite en tant que plage durant laquelle il convient de réutiliser les données réutilisables.

6. Procédé d'impression comprenant les étapes consistant à :
générer, sur la base d'une tâche d'impression contenant au moins un élément de données réutilisables et de données variables, un élément correspondant de données intermédiaires (310) pour l'élément ou chaque élément de données réutilisables ;
convertir l'élément ou chaque élément de données intermédiaires généré (310) en un élément correspondant de données d'image (312) ; et
sélectionner et mémoriser, pour chaque élément de données réutilisables, l'élément correspondant de données intermédiaires (310) et/ou l'élément correspondant de données d'image (312) conformément à un type des données réutilisables qui indique s'il convient, ou non, de réutiliser les données réutilisables pour la tâche d'impression et/ou pour une autre tâche d'impression,
dans lequel, pour chaque élément de données réutilisables, l'élément correspondant de données d'image (312) des données réutilisables est mémorisé si le type des données réutilisables indique qu'il convient de réutiliser les données réutilisables dans une page d'impression de la tâche d'impression, ou l'élément correspondant de données intermédiaires (310) des données réutilisables est mémorisé si le type des données réutilisables indique qu'il convient de réutiliser les données réutilisables pour la tâche d'impression, et
dans lequel, pour chaque élément de données réutilisables, l'élément correspondant de données intermédiaires (310) et l'élément correspondant de données d'image (312) des données réutilisables sont mémorisés si le type des données réutilisables indique qu'il est possible de réutiliser les données réutilisables pour au moins une tâche d'impression supplémentaire.

7. Programme qui, lorsqu'il est exécuté par un ordinateur, amène l'ordinateur à mettre en œuvre le procédé selon la revendication 6.

8. Programme qui, lorsqu'il est chargé dans un ordinateur, amène l'ordinateur à devenir l'appareil d'impression selon l'une quelconque des revendications 1 à 5.

9. Support d'informations contenant en mémoire le programme informatique selon la revendication 7 ou 8.
